(19) **Europäisches Patentamt**

**European Patent Office**

**Office européen des brevets**

(11) **EP 1 522 028 B1**

(12) **EUROPÄISCHE PATENTSCHRIFT**

(45) Veröffentlichungstag und Bekanntmachung des Hinweises auf die Patenterteilung:
**24.05.2006 Patentblatt 2006/21**

(21) Anmeldenummer: **03787637.2**

(22) Anmeldetag: **07.07.2003**

(51) Int Cl.:
**_G06F 17/22_** _(2006.01)_

(86) Internationale Anmeldenummer:
**PCT/DE2003/002274**

(87) Internationale Veröffentlichungsnummer:
**WO 2004/017225 (26.02.2004 Gazette 2004/09)**

(54) **VERFAHREN UND VORRICHTUNGEN ZUM KODIEREN/DEKODIEREN VON STRUKTURIERTEN DOKUMENTEN, INSBESONDERE VON XML-DOKUMENTEN**

METHOD AND DEVICES FOR ENCODING/DECODING STRUCTURED DOCUMENTS, ESPECIALLY XML DOCUMENTS

PROCEDE ET DISPOSITIF POUR CODER/DECODER DES DOCUMENTS STRUCTURES, NOTAMMENT DES DOCUMENTS XML

(84) Benannte Vertragsstaaten:
**AT BE BG CH CY CZ DE DK EE ES FI FR GB GR HU IE IT LI LU MC NL PT RO SE SI SK TR**

(30) Priorität: **15.07.2002 DE 10231971**
**18.10.2002 DE 10248758**

(43) Veröffentlichungstag der Anmeldung:
**13.04.2005 Patentblatt 2005/15**

(73) Patentinhaber: **SIEMENS AKTIENGESELLSCHAFT 80333 München (DE)**

(72) Erfinder:
• **HEUER, Jörg**
**81539 München (DE)**
• **HUTTER, Andreas**
**81673 München (DE)**
• **NIEDERMEIER, Ulrich**
**94405 Landau (DE)**

(56) Entgegenhaltungen:
**FR-A- 2 813 743**

• **"TEXT OF ISO/IEC FCD 15938-1 INFORMATION TECHNOLOGY - MULTIMEDIA CONTENT DESCRIPTION INTERFACE - PART 1 SYSTEMS" ISO/IEC JTC1/SC29/WG11 MPEG01/N4001, XX, XX, März 2001 (2001-03), Seiten 1-2,I-V,6-58, XP001001465 in der Anmeldung erwähnt**
• **GIRARDOT M ET AL: "MILLAU: AN ENCODING FORMAT FOR EFFICIENT REPRESENTATION AND EXCHANGE OF XML OVER THE WEB" COMPUTER NETWORKS AND ISDN SYSTEMS, NORTH HOLLAND PUBLISHING. AMSTERDAM, NL, Bd. 33, Nr. 1-6, Juni 2000 (2000-06), Seiten 747-765, XP001005949 ISSN: 0169-7552**

EP 1 522 028 B1

**Beschreibung**

Die Erfindung betrifft Verfahren bzw. Vorrichtungen zum Encodieren von strukturierten Dokumenten, insbesondere XML-Dokumenten, bei denen aus einem strukturierten Dokument in Abhängigkeit eines Schemas ein Bitstrom erzeugt wird und ein Verfahren bzw. eine Vorrichtung zum Decodieren, bei denen aus einem Bitstrom in Abhängigkeit eines Schemas ein strukturiertes Dokument erzeugt wird.

Im Rahmen der Arbeit am MPEG-7 Standard wurde ein Verfahren zur binären Codierung von XML Daten entwickelt, das im folgenden BiM-Verfahren genannt wird und beispielsweise aus der Veröffentlichung ISO/IEC FDIS 15938-1:2001(E), "Information Technology - Multimedia Content Description Interface - Part 1: Systems" bekannt ist. Dieses Verfahren verwendet XML Schema Definitionen, die beim Encoder und Decoder vorliegen, beispielsweise das MPEG-7 Schema, um die Codes für die einzelnen Datenelemente der XML Beschreibung zu generieren. Dieses Verfahren setzt voraus, dass dem Encoder und dem Decoder zumindest teilweise die selben Schemadefinitionen vorliegen. Dies kann beispielsweise gewährleistet werden, indem ein standardisiertes XML Schema im Decoder fest eingebaut wird. Außerdem besteht die Möglichkeit das Schema separat oder zusätzlich zum eigentlichen Dokument dem Decoder zu übermitteln. Die Übertragung des Schemas vom Encoder zum Decoder kann in textueller Form durchgeführt werden, wobei eine Standard Textkompression, wie z.B. ZIP, angewendet werden kann.

Die der Erfindung zu Grunde liegende Aufgabe besteht nun darin, Verfahren bzw. Vorrichtungen derart anzugeben, dass die Übertragung des Schemas besonders effizient erfolgt und dass die übertragene Datenmenge und die Rechenleistung am Decoder, die für die Erzeugung der Codetabellen aus dem Schema nötig ist, reduziert wird. Außerdem soll die Konsistenz eines nicht vollständig übertragenen Schemas sichergestellt werden.

Die französische Patentanmeldung (FR 2 813 743) beschäftigt sich mit einer Methode zum Komprimieren bzw. Dekomprimieren eines strukturierten Dokuments. Dabei wird ein zu dem Dokument gehöriges Strukturdiagramm analysiert und standardisiert, um eine einzelne vordefinierte Sequenz zu erhalten. Dieses standardisierte Diagramm wird kompiliert und komprimiert.

Das Dokument (Seyrat et al., ISO/IEC JTC1/SC29/WG11, "Text of ISO/IEC FCD 15938-1 Information technology - Multimedia content description interface - Part 1 Systems", Doc. MPEG01/N4001, März 2001, Singapore, XP001001465) umfasst einen Entwurf eines ersten Teils des MPEG-7 Standards. Dieser Entwurf befasst sich mit einer Architektur des Standards, mit Werkzeugen, die zur effizienten Speicherung und Transport bei der Erstellung von MPEG-7 Beschreibungen benötigt werden und eine Synchronisation zwischen Inhalt und Beschreibung erlauben.

Das Dokument (Girardot et al., "Millau: an encoding format for efficient representation and exchange of XML over the Web", Computer Networks 33, S. 747-765, 2000, Elsevier, XP001005949) beschäftigt sich mit einer Kompression von XML Strukturen und Daten, wobei die Kompressionsalgorithmen neben einer getrennten Kompression von Struktur und Daten ein dazugehöriges Schema bei der Kompression der Struktur berücksichtigen.

Diese Aufgabe wird hinsichtlich des Encodierverfahrens durch die Merkmale des Patentanspruchs 1, hinsichtlich des Decodierverfahrens durch die Merkmale des Patentanspruchs 6, hinsichtlich der Encodiervorrichtung durch die Merkmale des Patentanspruchs 11 und hinsichtlich der Decodiervorrichtung durch die Merkmale des Patentanspruchs 12 erfindungsgemäß gelöst.

Die weiteren Ansprüche betreffen vorteilhafte Ausgestaltungen der erfindungsgemäßen Verfahren bzw. Vorrichtungen.

Die Erfindung besteht im wesentlichen darin, mit einem Encodierverfahren aus einem Schema in Abhängigkeit eines Metaschemas einen Bitstrom oder einen Teil eines Bitstromes zu erzeugen, wobei eine oder mehrere der folgenden Optimierungen durchgeführt werden:

-  Abspaltung von anonymous Types aus Elementdeklarationen und Attributdeklarationen, und Codierung als eigener Typ, dessen Typdefinition als Top-Level Element in der Schema Definition instantiiert ist,
-  Normalisierung der Syntax Trees auf Encoderseite,
-  Ersetzung der Zeichenketten von Typnamen
-  Übertragung von Informationen für den Vererbungsbaum.

Die Dekodierung berücksichtigt diese Optimierungen und erzeugt umgekehrt aus dem Bitstrom ein Schema.

Die Erfindung wird nachfolgend anhand von in den Zeichnungen dargestellten Ausführungsbeispielen erläutert. Dabei zeigt

Figur 1      eine Prinzipdarstellung zu Erläuterung der erfindungsgemäßen Encodierung/Decodierung,

Figur 2      eine Darstellung zur Erläuterung der Details einer bevorzugten Ausführungsform der Erfindung,

Figur 3      eine Darstellung zur Erläuterung der Details einer weiteren bevorzugten Ausführungsform der Erfindung und

Figur 4    eine Prinzipdarstellung einer bevorzugten Ausführungsform eines erfindungsgemäßen Decoders.

Da XML Schemas ihrerseits XML Dokumente sind, denen eine standardisierte Syntaxdefinition zugrunde liegt, nämlich ein sogenanntes "Schema for Schemas" (W3C Spezifikation), das quasi ein Metaschema darstellt, kann ein Schema ebenfalls mit dem oben genannten BiM-Verfahren codiert und übertragen werden.

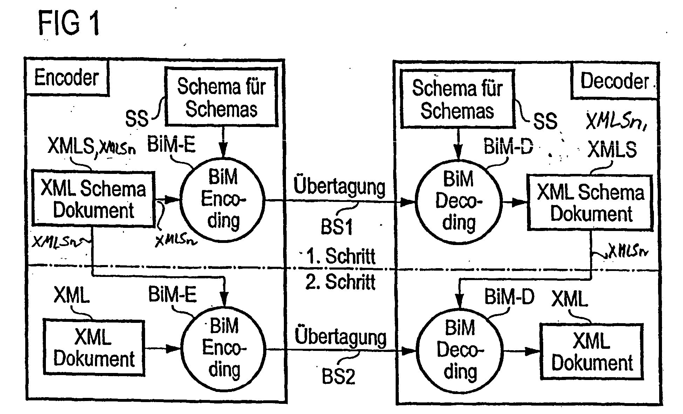

In Figur 1 ist eine Anordnung gezeigt, bei der, in einem ersten Schritt, mit einem BiM-Encodierverfahren BiM-E aus einem XML-Schema XMLS in Abhängigkeit eines Metaschemas SS einen Teil eines Bitstromes oder einen Bitstrom BS1 erzeugt wird und bei der, in einem zweiten Schritt, mit dem selben BiM-Encodierverfahren BiM-E aus einem XML-Dokument XML in Abhängigkeit des Schemas XMLS ein weiterer Teil des Bitstromes oder ein Bitstrom BS2 erzeugt wird sowie in umgekehrter Richtung mit einem BiM-Decodierverfahren BiM-D aus den beiden Teile des Bitstromes oder aus den Bitströmen BS1 und BS 2 ein XML Schema und das XML-Dokument wiedergewonnen werden.

In einer ersten bevorzugten Ausgestaltung der Erfindung wird eine Abspaltung von sogenannten "anonymous Types" aus der Element- bzw. Attributdeklaration vorgenommen.

Die Übertragung eines XML Dokuments erfolgt beim BiM-Verfahren "depth first", der Vorgang der Schema Kompilierung am Decoder verlangt aber einen Aufbau "breadth first", wobei die diese Ausdrücke bspw. auf der Internetseite http://www.generation5.org/simple_search.shtml näher erläutert sind. Bei Gruppen wie Sequence oder Choice kann dies durch einen kleinen Zwischenspeicher auf Decoderseite ausgeglichen werden, aber bei den "anonymous Types", die den Typ eines einzelnen Elements oder Attributs definieren können rechtfertigt der Aufwand eine Umstrukturierung auf Encoderseite: die anonymous Type Definitionen, im nachfolgenden Beispiel mit ATO bezeichnet, werden aus der Elementdeklaration des Elements " CurriculumVitae" herausgelöst und erhalten einen Namen und/oder Code, der zur Referenzierung bei dem entsprechenden Element verwendet wird.

Vorteilhafterweise wird hierdurch die Tiefe der Hierarchie der übertragenen Typen reduziert, wodurch die Kompilierung des Schemas auf der Decoderseite vereinfacht wird.

Beispiel:

Schema vor der Umstrukturierung

```
<complexType name="PersonDescriptor">
    <element name="CurriculumVitae">
        <complexType>
            <element name="name" type="string"/>
            <element name="birthday" type="date"/>
                ...
        </complexType>
    </element>
    <element name="profession" type="profTp" />
</complexType>
```

Schema nach der Umstrukturierung

```
<complexType name="PersonDescriptor">
    <element name="CurriculumVitae" type="AT0"/>
    <element name="profession" type="profTp" />
</complexType>



<complexType name="AT0">
    <element name="name" type="string"/>
    <element name="birthday" type="date"/>
                ...
</complexType>
```

In einer zweiten bevorzugten Ausgestaltung der Erfindung wird die Normalisierung der Syntax Trees, wie sie in BiM spezifiziert ist, auf der Encoderseite durchgeführt.

Im BiM-Verfahren werden sogenannte "Finite State Automatons" die zur Dekodierung des Bitstroms verwendet werden aus Syntax Trees erzeugt, welche die Struktur des XML Schemas abbilden. Um die Codiereffizienz zu steigern entsprechen diese Syntax Trees nicht 1:1 den textuellen XML Definitionen, sondern es werden Normalisierungen vorgenommen. Drei verschiedene Fälle können hierbei auftreten:

1. Vereinfachung einer Gruppe, die nur ein Element enthält:

Die Gruppe wird aufgelöst, und das enthaltene Element wird auf der-Ebene der aufgelösten Gruppe in das Content Modell einsortiert, wobei die Attribute minOccurs und maxOccurs des Elements durch das Produkt der entsprechenden Attribute der aufgelösten Gruppe und des Elements vor der Umgruppierung ersetzt wird.

2. Vereinfachung einer choice-Gruppe, die ein Element mit dem Attributwert minOccurs=0 enthält:

Das Attribut "minOccurs" der choice Gruppe wird unabhängig vom vorhergehenden Wert auf 0 gesetzt, das Element, das einen Attributwert minOccurs=0 hatte, wird einen Attributwert minOccurs=1 zugewiesen.

3. Vereinfachung von verschachtelten choice-Gruppen:

Enthält eine choice Gruppe eine andere choice Gruppe, die die Attributwerte minOccurs=maxOccurs=1 enthält, so wird diese choice Gruppe aufgelöst, und der Inhalt direkt der darüberliegenden choice Gruppe eingegliedert.

Diese Vereinfachungen sollten bei der Übertragung des Schemas schon-am Encoder vorgenommen werden, da die Syntax Tree Transformationen die Vergabe der normativen Codes beeinflusst, und die Kompilierung des Schemas auf Decoderseite vereinfacht wird, wenn das Content-Modell direkt übernommen werden kann.

Die Vorteile liegen hier darin, dass hierdurch ebenfalls der Decoder entlastet wird und das Content-Modell direkt wie es bei der Typdecodierung entsteht dem Schema-Compiler zugeführt werden kann.

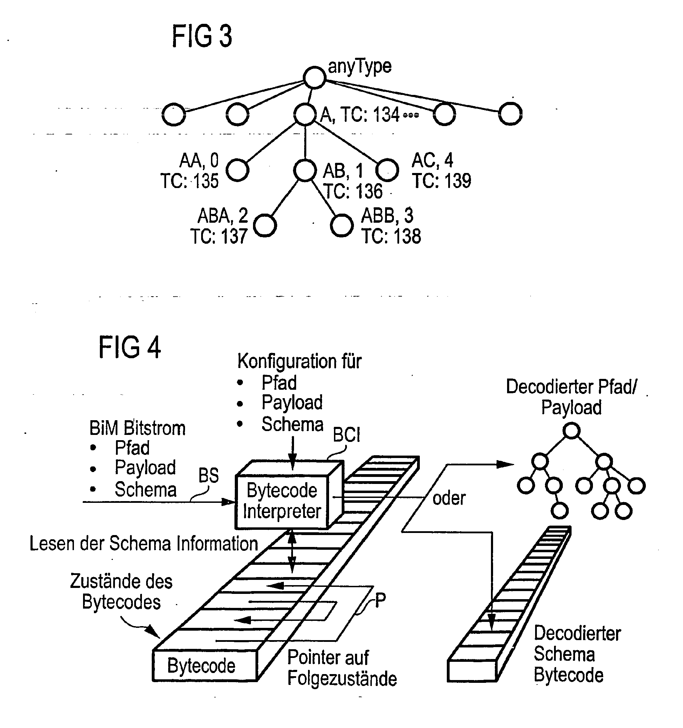

In einer dritten bevorzugten Ausgestaltung der Erfindung wird, wie in Figur 2 gezeigt, eine Ersetzung der Zeichenketten von Typnamen durchgeführt.

Im Attribut "name" und "base" einer Typdefinition, sowie beim Attribut "type" einer Element- oder Attributdeklaration treten häufig im Schema die selben Typnamen auf, die als Zeichenkette mehrfach übertragen werden würden. Bei der Codierung von Typnamen ist es deshalb vorteilhaft anstatt des Namens nur eine Nummer zu codieren, und separat dazu eine Tabelle, welche die Nummern wieder zu den ürsprünglichen Namen in Beziehung setzt. Als Nummer bietet sich die Typnummer an, die der unten noch näher erläuterte Vererbungsbaum des UrTyps allen comp1exTypes zuordnet.

Entsprechendes gilt auch für das Attribut "name" von globalen Element-Deklarationen und deren Referenzen in "ref"-Attributen und für den Namen von Ersetzungsgruppen im Attribut "substitutionGroup". In diesen Fällen kann beispielsweise der Schemaverzweigungscode SBC der globalen Elemente verwendet werden.

Hiermit kann Datenvolumen eingespart werden, da eine wiederholte Referenzierung auf den selben Typnamen kompakter dargestellt werden kann und die Typzuordnungstabelle mit einem Standardkompressor besser komprimiert werden kann, da die Typnamen nicht über den Bitstrom verteilt auftreten, sondern kompakt in einem zusammenhängenden Bereich im Bitstrom.

In einer vorteilhaften Ausführungsform wird eine Liste umfassend die Typ- oder Elementnamen oder Namen von Erstetzungsgruppen codiert. Statt Nummern den Namen explizit zuzuordnen, wird in dieser Ausführungsform die Position eines Namen in der Liste als Nummer verwendet. Dies ist vorteilhaft, da in der Liste keine Nummern mehr codiert werden müssen und somit eine effizientere Übertragung gewährleistet ist.

In einer vierten bevorzugten Ausgestaltung der Erfindung erfolgt eine Übertragung von Informationen für den Vererbungsbaum.

Jede Typdefinition enthält im sogenannten Attribut "base", falls es vorhanden ist, die Information von welchem Typ er vererbt worden ist. Wenn alle diese Informationen für ein Schema gesammelt werden, ergibt sich eine Baumstruktur, der sogenannte Vererbungsbaum. Der Vererbungsbaum wird beim BiM-Codierungsverfahren verwendet, um im Falle einer Typumandlung (type-cast) den neuen Typ des Elements zu übermitteln. Dabei ist der Code der allen vom Basistyp vererbten Typen zugeordnet wird, also der sogenannte Type Code, sowie die Länge dieses Codes für eine korrekte Dekodierung entscheidend. Die Länge ergibt sich aus der Gesamtzahl aller Typen im Vererbungsbaum unter dem Basistyp. Wenn das Schema vollständig übertragen wurde lassen sich sowohl die Codes als auch die Codelänge auf der Decoderseite eindeutig ermitteln. Wenn aber das Schema auf der Decoderseite nicht vollständig ist, muss noch Zusatzinformation übertragen werden, um bereits übertragenen Typen Type Codes zuzuweisen.

Jeder übertragene Typ hat im Namensfeld die Nummer des Typecode bezogen auf den Urtyp. Damit lässt sich der Typecode der abgeleiteten Typen durch einfache Differenzbildung ermitteln. Es fehlt noch die Information über die Mächtigkeit des durch den übertragenen Typen definierten Unterbaums, und damit die Länge der Typecodes der von diesem übertragenen Typen abgeleiteten Typen. Diese Länge lässt sich mit wenigen Bits in einem variablen Längencode übertragen.

In Figur 3 ist beispielhaft ein Vererbungsbaum eines Schemas mit dem Typ A, von dem weitere Typen abgeleitet sind, dargestellt. Dieser Typ bekommt bezüglich des Urtyps "anyType" beispielsweise den Typecode 134. Von Typ A sind die Typen AA, AB und AC abgeleitet, deren Typecodes bezüglich des Urtyps angegeben sind. Um den Typecode bezüglich des Basistyps A zu ermitteln, genügt es vom Typecode des gewünschten Typs den Typecode des Basistyps und eins zu subtrahieren:

$$TC_{Type} = TC_{Type\ bzgl.\ Urtyp} - TC_{Basistyp\ bzgl.\ Urtyp} - 1$$

Die fehlende Information über die Länge des Typecodes läßt sich am besten in der Referenztabelle als zusätzliche Zahl integrieren.

Um die Information in der Typzuordnungstabelle mit einem Standardkompressor komprimieren zu können empfiehlt es sich, sie auf ganze Bytes ausgerichtet abzulegen (bytealigned). Die erste Zahl ist eine vluimsbf5 Zahl, die die Zahl der Zeilen in der Tabelle codiert, dann folgt eine vluimsbf5 Zahl, die die Nummer an Bits für den Typecode codiert, und eine weitere vluimsbf5 Zahl, die den Typecode bzgl. des Urtyps selbst darstellt. Es folgen Füllbits oder Stuffing Bits um die Ausrichtung auf Bytegrenzen zu erreichen.

| Format der Typzuordnungstabelle | | | |
|---|---|---|---|
| **Vuimsbf5** | **Vuimsbf5** | **Bits** | **Zeichenkette** |
| Zahl der Zeilen | | | |
| Länge Typecode 1 | Typecode 1 | 0-7 Füllbits | Name Typ 1 |
| Länge Typecode 2 | Typecode 2 | 0-7 Füllbits | Name Typ 2 |
| . . . | . . . | . . . | . . . |

Die Übertragung einer Typzuordnungstabelle ermöglicht es, die in einem kodierten Dokument evtl. vorhandenen Typenodes korrekt zu decodieren, auch wenn das zugrundeliegende Schema nicht oder noch nicht vollständig übertragen und/oder decodiert wurde.

Entsprechend sind mit globalen Elementen der globale SBC und bei Elementen, die zu einer Ersetzungsgruppe gehören, der Ersetzungscode zu übermitteln, wobei vorab für alle globalen Elemente einmal die globale SBC-Länge und mit dem Kopfelement der Ersetzungsgruppe die Länge des jeweiligen Ersetzungscodes übermittelt werden.

Es ist jede Kombination der in den einzelnen Ausgestaltungen dargestellten Merkmale bei der Encodierung möglich und kann in entsprechender Weise auch bei der Decodierung Eingang finden.

Das BiM-Verfahren erfordert es, dass das XML-Schema in ein Format kompiliert wird, das die Bestimmung der Länge der Codeworte und die Auswahl der Datenelemente durch die Werte der Codes gestattet. Dafür gibt es mehrere Möglichkeiten. Im MPEG-7 Standard (ISO/IEC 15938-1:2001 Part1: Systems bzw. ISO/IEC 15938-6:2001 Part6: Referenzsoftware) ist für die Decodierung der Nutzlast bzw. Payload ein Modell vorgeschlagen, das Endliche Zustandsautomaten (Finite State Automatons) verwendet, und für die Decodierung eines Context Pfades Codetabellen, die aus dem Schema generiert werden.

In einer in Figur 4 dargestellten bevorzugten Ausgestaltung des erfindungsgemäßen Decoders wird der Decodiervorgang mit einem Bytecodemodell beschrieben, wobei die Schemastruktur in ein System aus vernetzten Zuständen übersetzt wird, die von einem Bytecodeinterpreter BCI abgearbeitet werden, wobei ein vom Encoder empfangener Bitstrom BS die Information über den auszuwählenden Folgezustand enthält. Im Unterschied zu dem Modell, das im MPEG-7 Standard vorgeschlagen wird, ist das Bytecodemodell so angelegt, dass sowohl ein Bitstrom, der eine Payload repräsentiert, als auch ein Bitstrom der einen Context Pfad darstellt decodiert werden kann. Es ist deshalb nicht erforderlich dieselbe Information, die im Schema enthalten ist zweimal für die verschiedenen Codierverfahren am Decoder vorzuhalten. Der Interpreter BCI liest die Information aus dem Eingangsbitstrom, die ein XML Dokument oder ein XML Schema im BiM Format codiert. Diese Information erlaubt die Auswahl unter den Folgezuständen des aktuellen Zustandes, der im Bytecode abgelegt ist. Die Folgezustände sind innerhalb des Bytecodes als Pointer P fest angelegt. Je nach Konfiguration wird ein Pfad, eine Payload oder ein Bytecode ausgegeben.

Die Decodierung eines Schemas läßt sich mit den oben vorgeschlagenen Modifikationen ebenfalls effizient im Bytecodemodell realisieren. In diesem Fall wird keine Payload und kein Pfad ausgegeben, sondern direkt Bytecode erzeugt, der vom Bytecodeinterpreter für die Decodierung der entsprechenden Typen verwendet werden kann.

Der Bytecode setzt sich aus Strukturelementen bzw, den Zuständen zusammen. Die Zustände sind von verschiedenem Typ, der mit dem Headerbitfeld des Zustandes identifiziert wird. Die Zustände enthalten abhängig vom Typ verschiedene Informationsfelder, die vom Bytecodeinterpreter gelesen, und je nach Konfiguration (Payload/ Context Pfad) und aktuellem zustand ausgewertet werden.

Für die Arten von Zuständen, welche die Schemainformation repräsentieren sind mehrere Varianten denkbar. Wesentlich ist, dass sich durch die Zustände des Bytecodemodells alle Syntaxelemente eines XML Schemas nachbilden lassen, und dass die gesamte Information, die zur effizienten Decodierung der beiden im MPEG-7 Standard definierten Algorithmen (Context Pfad/Payload) notwendig ist, in den Zuständen zur Verfügung gestellt wird.

Ein möglicher Aufbau des Bytecodes wird im folgenden kurz dargestellt.

Arten von Zuständen, Übersicht:

1. Kopfzustand eines complexTyps

Der Kopfzustand eines Typs bildet den Einsprungspunkt bei der Decodierung eines complexType. Er enthält den Namen des Typs (falls es sich nicht um einen anonymen Typ handelt) sowie Information zu Vererbung des Typs (Zeiger auf Basiszustand) sowie Polymorphismus.

Spezifisch für die Payloadcodierung ist ein Zeiger auf eine Liste der Attribute des Typs. Spezifisch für die Context Pfad Codierung sind Felder mit der Zahl der Kindelemente für die Context - und Operand Tree Branch Code Tabellen. Das letzte Informationsfeld ist ein Zeiger auf den Folgezustand, d.h. der erste Zustand, der den Inhalt des complexTypes repräsentiert (beispielsweise ein Elementzustand oder ein Auswahlzustand).

Graphische Darstellung eines Kopfzustands:

| Headerbitfeld |
|---|
| Pointer auf String mit Name |
| Pointer auf Kopfzust. Basistyp |
| Pointer auf Vererbungsbaum |
| Zahl der Kinder Context TBC |
| Zahl der Kinder Operand TBC |

Tabelle fortgesetzt

| Pointer auf Folgezustand |
| --- |

### 2. Auswahlzustand

Ein Auswahlzustand bildet eine choice Gruppe des XML Schemas nach. Der Auswahlzustand enthält im wesentlichen eine Pointerliste mit möglichen Folgezuständen. Um den tatsächlich ausgewählten Zustand zu bestimmen muß bei der Decodierung einer Payload der Bitstrom gelesen werden. Vom Auswahlzustand gibt es zwei Varianten: einen Startzustand, der in die verschiedenen möglichen Folgezustände verzweigt, sowie einen Endzustand, der die Auswahl wieder zusammenfaßt.

### 3. Elementzustand

Der Elementzustand bildet eine Elementdeklaration in einem complexType eines Schemas nach. Er enthält einen Pointer auf eine Zeichenkette mit dem Namen des Elements, sowie einen Pointer auf den Kopfzustand des Typs. Ferner ist evtl. Information über die Länge des Position Codes (nur für Pfad- Decodierung) und für Substitution Groups vorhanden.

### 4. Attributzustand

Ein Attributzustand bildet eine Attributdeklaration eines Schemas nach. Enthalten sind ein Pointer auf den Namen des Attributs, sowie ein Pointer auf den Kopfzustand des simple-Type des Attributs.

### 5. Occurrencezustand

Ein Occurrencezustand bildet die minOccurs und maxOccurs Attribute nach, die bei einem XML Schema z.B. bei einem Element oder einer Gruppe (choice, sequence, ...) auftreten können. Er enthält einen Zeiger auf den Folgezustand, falls eine weitere Instanz des Elements oder der Gruppe auftritt, sowie einen Zeiger auf den Folgezustand, falls die letzte Instanz der Gruppe codiert wurde. Da bei XML Schemas die Möglichkeit besteht, daß ein Element sich selbst enthält (in der complexType Definition des Elements, oder in einer noch tieferen Verschachtelung tritt das Element selbst wieder auf) kann auch ein Occurrencezustand gleichzeitig mehr als einmal aktiv sein. Deshalb ist ein Zeiger auf einen Stapel innerhalb des Occurrencezustands erforderlich,-die den aktuellen Zustand jeder aktiven Instanz des Occurrencezustands sichert.

### 6. Endzustand eines Typs

Der Endzustand eines Typs enthält eine Zeigerliste mit allen Attributen dieses Typs. Sie ist bei der Decodierung eines Pfades erforderlich, da in den Tree Branch Code Tabellen alle Attribute am Ende der Tabelle einsortiert werden. Beim erreichen eines Endzustands verzweigt der Bytecodeinterpreter hierarchisch in das Element, das diesen Typ aufgerufen hat. Die entsprechende Information über das aufrufende Element muß im Arbeitsspeicher des Bytecodeinterpreters abgelegt sein.

### 7. Kopfzustand eines simpleTypes

Dieser Zustand steuert die Decodierung von Inhalt, d.h. er enthält einen Pointer auf einen Codec, der spezifisch Daten des betreffenden Typs aus dem Bitstrom lesen und decodieren kann. Der Typ des Codecs ist in einem Informationsfeld spezifiziert.

Die wesentlichen Vorteile des Bytecodemodells im Vergleich zum Stand der MPEG-7 Referenzsoftware sind:

1. Die Schemainformation wird für beide Codierverfahren (Context Pfad / Payload) nur einmal am Decoder repräsentiert. Der größte Teil der Information in den Bytecodezuständen sind für beide Verfahren relevant. Ein kleinerer Teil ist spezifisch für jeweils eines der beiden Verfahren. Deshalb ist die Darstellung der Schemainformation am Decoder sehr kompakt.

2. Das Bytecodemodell stellt ein wohldefiniertes Datenformat für Schemainformation zur Verfügung, das sich z.B. auch zum Vorkompilieren und Abspeichern eignet (anstatt dem XML-Schema als Text).

3. Die Ausführung des Bytecodes durch einen Standardprozessor kann sehr schnell erfolgen, da das Bytecodemodell den Decodiervorgang sehr gut vorbereitet. Alle Information ist direkt im Zustand über Zeiger verfügbar, und muß nicht (wie in ISO/IEC 15938-6, Part 6: Referenzsoftware) zum Teil erst in Listen gesucht werden.

Ein entsprechender Encoder kann auf die selbe Art und Weise realisiert werden, wobei er in der Weise invers ist, als dass die Zustände von der textuellen Repräsentation des strukturierten Dokuments gesteuert werden und die Zustandsübergänge die binäre Repräsentation generieren.

**Patentansprüche**

1. Verfahren zum Encodieren und Übertragen eines XML-Dokuments (XML), mit folgenden Schritten:

a) Normierung des zu dem XML-Dokument (XML) zugehörigen XML-Schemas (XMLS), wobei die Normierung des XML-Schemas (XMLS) einen der folgenden Schritte umfasst:

- Vereinfachung einer Gruppe, die nur ein Element enthält:

Die Gruppe wird aufgelöst, und das enthaltene Element wird auf der Ebene der aufgelösten Gruppe in das Content Modell einsortiert, wobei die Attribute minOccurs und maxOccurs des Elements durch das Produkt der entsprechenden Attribute der aufgelösten Gruppe und des Elements vor der Umgruppierung ersetzt wird;

- Vereinfachung einer choice-Gruppe, die ein Element mit dem Attributwert minOccurs=0 enthält:

Das Attribut minOccurs der choice-Gruppe wird unabhängig vom vorhergehenden Wert auf 0 gesetzt, das Element, das einen Attributwert minOccurs=0 hatte, wird ein Attributwert minOccurs=1 zugewiesen;

- Vereinfachung von verschachtelten choice-Gruppen:

Enthält eine choice-Gruppe eine andere choice-Gruppe, die die Attributwerte minOccurs=maxOccurs=1 enthält, so wird diese choice-Gruppe aufgelöst, und der Inhalt direkt der darüberliegenden choice-Gruppe eingegliedert;

wobei die Begriffe Gruppe, Element, Content Modell, Attribut, minOccurs, maxOccurs und choice-Gruppe in der normativen Beschreibung der XML-Schema-Sprache definiert sind;

b) Codieren des normierten XML-Schemas (XMLSn) mit Hilfe eines Metaschemas (SS);
c) Übertragen des codierten XML-Schemas in einem ersten Bitstrom (BS1);
d) Codieren des XML-Dokuments (XML) mittels des zugehörigen normierten XML-Schemas (XMLSn);
e) Übertragen des codierten XML-Dokuments in einem zweiten Bitstrom (BS2);
wobei der erste und zweite Bitstrom (BS1, BS2) zum Empfang für einen Decoder vorgesehen sind, der folgende Schritte ausführt:
f) Decodieren des im ersten Bitstrom (BS1) übertragenen codierten XML-Schemas in das normierte XML-Schema (XMLSn) mittels des Metaschemas, wobei das normierte Schema und das Metaschema (SS) den bei der Codierung verwendeten Schemas entsprechen;
g) Decodieren des im zweiten Bitstrom (BS2) übertragenen codierten XML-Dokuments mittels des normierten XML-Schemas (XMLSn), ohne eine weitere Normierung des normierten XML-Schemas (XMLSn)vorzunehmen.

2. Verfahren nach Anspruch 1,
bei dem Elementdeklarationen und/oder Attributdeklarationen der Schemadefinition eines strukturierten Dokuments derart umstrukturiert werden, dass anonyme Typdefinitionen (ATO) aus den Elementdeklarationen und/oder Attributdeklarationen herausgelöst werden und einen Namen und/oder Code erhalten, der zur Referenzierung bei dem entsprechenden Element verwendet wird.

3. Verfahren nach Anspruch 1 oder 2,
bei dem anstatt Typnamen und/oder Elementnamen und/oder Namen von Ersetzungsgruppen nur Nummern sowie eine oder mehrere Tabellen mit einer Zuordnung zwischen Nummern und Typnamen und/oder Elementnamen und/oder Namen von Ersetzungsgruppen codiert werden.

4. Verfahren nach einem der Ansprüche 1 bis 3,
bei dem eine oder mehrere Listen umfassend die Typnamen und/oder Elementnamen und/oder Namen von Ersetzungsgruppen sowie die Positionen der Typnamen und/oder Elementnamen und/oder Namen von Ersetzungsgruppen in der Liste anstatt Typnamen und/oder Elementnamen und/oder Namen von Ersetzungsgruppen codiert werden.

5. Verfahren nach einem der vorhergehenden Ansprüche,
bei dem Informationen für den Vererbungsbaum von Typen, globalen Elementen und/oder Ersetzungsgruppen codiert werden, wobei jeder Typ durch eine Information über seinen Typcode bezogen auf den Urtyp und der Länge aller Typcodes, die sich auf den beschriebenen Typen beziehen, beschrieben wird und/oder jedes globale Element durch die Länge des SBC und einen SBC und/oder jedes Element in einer Ersetzungsgruppe durch die Länge der Ersetzungscodes und einen Ersetzungscode beschrieben wird.

6. Verfahren zum Decodieren eines ersten und zweiten Bitstroms (BS1, BS2), die mit einem Encodierverfahren aus einem XML-Dokument (XML) erzeugt wurden, wobei das Encodierverfahren folgende Schritte umfasst:

   a) Normierung des zu dem XML-Dokument (XML) zugehörigen XML-Schemas (XMLSn), wobei die Normierung des XML-Schemas (XMLSn) einen der folgenden Schritte umfasst:

   - Vereinfachung einer Gruppe, die nur ein Element enthält:

      Die Gruppe wird aufgelöst, und das enthaltene Element wird auf der Ebene der aufgelösten Gruppe in das Content Modell einsortiert, wobei die Attribute minOccurs und maxOccurs des Elements durch das Produkt der entsprechenden Attribute der aufgelösten Gruppe und des Elements vor der Umgruppierung ersetzt wird;

   - Vereinfachung einer choice-Gruppe, die ein Element mit dem Attributwert minOccurs=0 enthält:

      Das Attribut minOccurs der choice-Gruppe wird unabhängig vom vorhergehenden Wert auf 0 gesetzt, das Element, das einen Attributwert minOccurs=0 hatte, wird ein Attributwert minOccurs=1 zugewiesen;

   - Vereinfachung von verschachtelten choice- Gruppen:

      Enthält eine choice-Gruppe eine andere choice-Gruppe, die die Attributwerte minOccurs=maxOccurs=1 enthält, so wird diese choice-Gruppe aufgelöst, und der Inhalt direkt der darüberliegenden choice-Gruppe eingegliedert;

   wobei die Begriffe Gruppe, Element, Content Modell, Attribut, minOccurs, maxOccurs und choice-Gruppe in der normativen Beschreibung der XML-Schema-Sprache definiert sind;
   b) Codieren des normierten XML-Schemas (XMLSn) mit Hilfe eines Metaschemas (SS);
   c) Übertragen des codierten XML-Schemas in einem ersten Bitstrom (BS1);
   d) Codieren des XML-Dokuments (XML) mittels des zugehörigen normierten XML-Schemas (XMLSn);
   e) Übertragen des codierten XML-Dokuments in einem zweiten Bitstrom (BS2);
   wobei in dem Decodierverfahren folgende Schritte ausgeführt werden:
   f) Decodieren des im ersten Bitstrom (BS1) übertragenen codierten XML-Schemas in das normierte XML-Schema (XMLSn) mittels des Metaschemas (SS), wobei das normierte Schema (XMLSn) und das Metaschema (SS) den bei der Codierung verwendeten Schemas entsprechen;
   g) Decodieren des im zweiten Bitstrom (BS2) übertragenen codierten XML-Dokuments mittels des normierten XML-Schemas (XMLSn), ohne eine weitere Normierung des normierten XML-Schemas (XMLSn) vorzunehmen.

7. Verfahren nach Anspruch 6,
bei dem Elementdeklarationen und/oder Attributdeklarationen eines strukturierten Dokuments derart umstrukturiert werden, dass anonyme Typen (AT0), denen zur Übertragung ein Name und/oder ein Code zugewiesen wurde, in die jeweilige Elementdeklaration oder Attributdeklaration eingefügt werden, von der der jeweilige anonyme Typ referenziert wird.

**8.** Verfahren nach Anspruch 6 oder 7,
bei dem aus dem Bitstrom Typnamen und/oder Elementnamen und/oder Namen von Ersetzungsgruppen über Nummern sowie eine oder mehrere Tabellen mit einer Zuordnung zwischen Nummern und Typnamen und/oder Elementnamen und/oder Namen von Ersetzungsgruppen decodiert werden.

**9.** Verfahren nach einem der Ansprüche 6 bis 8,
bei dem aus dem Bitstrom Typnamen und/oder Elementnamen und/oder Namen von Ersetzungsgruppen über eine oder mehrere Listen umfassend die Typnamen und/oder Elementnamen und/oder Namen von Ersetzungsgruppen sowie die Positionen der Typnamen und/oder Elementnamen und/oder Namen von Ersetzungsgruppen in der Liste decodiert werden.

**10.** Verfahren nach einem der Ansprüche 6 bis 9,
bei dem zunächst aus dem Bitstrom Informationen für einen Vererbungsbaum von Typen und/oder globalen Elementen und/oder Ersetzungsgruppen decodiert werden, wobei jeder Typ durch eine Information über seinen Typcode bezogen auf den Urtyp und der Länge aller Typcodes, die sich auf den beschriebenen Typen beziehen, beschrieben wird,
und/oder jedes globale Element durch die Länge des SBC und einen SBC und/oder jedes Element in einer Ersetzungsgruppe durch die Länge der Ersetzungscodes und einen Ersetzungscode beschrieben wird.

**11.** Vorrichtung (Encoder) zum Encodieren von XML-Dokumenten, bei der eine Encodiereinheit vorhanden ist, die derart ausgestaltet ist, dass sie ein Encodierverfahren nach einem der Ansprüche 1 bis 5 ausführt.

**12.** Vorrichtung (Decoder) zum Decodieren von XML-Dokumenten, bei der eine Decodiereinheit vorhanden ist, die derart ausgestaltet ist, dass sie ein Decodierverfahren nach einem der Ansprüche 6 bis 10 ausführt.

**13.** Vorrichtung nach Anspruch 11,
bei der die Encodiereinheit einen konfigurierbaren Bytecodeinterpreter aufweist, der Informationen in einem Bytecode interpretiert und der, abhängig von der Konfigurierung, aus dem strukturierten Dokument basierend auf einem Bytecode einen Code erzeugt, der einen Pfad oder eine Nutzlast repräsentiert.

**14.** Vorrichtung nach Anspruch 12,
bei der die Decodiereinheit einen konfigurierbaren Bytecodeinterpreter aufweist, der durch Informationen aus dem Bitstrom konfigurierbar ist und der, abhängig von der Konfigurierung, aus dem Bitstrom basierend auf einem Bytecode einen Pfad, eine Nutzlast oder einen Bytecode erzeugt.

**Claims**

**1.** Method for encoding and transmitting an XML document (XML), comprising the following steps;

a) normalising the XML schema (XMLS) assigned to the XML document (XML), with the normalisation of the XML schema (XMLS) comprising one of the following steps:

- Simplification of a group which contains only one element:

the group is dissolved and the contained element is put into the content model at the level of the dissolved group, where the attributes minOccurs and maxOccurs of the element are replaced by the product of the corresponding attributes of the dissolved group and of the element prior to the regrouping;

- Simplification of a choice group containing an element with the attribute value minOccurs=0:

the attribute minOccurs of the choice group is set to 0 irrespective of the previous value, while the element which had an attribute value minOccurs=0 is assigned an attribute value minOccurs=1;

- Simplification of nested choice groups:

if a choice group contains another choice group which contains the attribute values minOccurs=maxOccurs=1, that choice group is dissolved and the contents are incorporated directly into the superordinate choice group

with the terms group, element, content model, attribute, minOccurs, maxOcurrs and choice group being defined in the normative description of the XML schema language;

b) Encoding of the normalised XML schema (XMLSn) with the aid of a metaschema (SS);

c) Transmitting the encoded XML schema in a first bit stream (BS1) ;

d) Encoding the XML document (XML) by means of the associated normalised XML schema (XMLSn);

e) Transmitting the encoded XML document in a second bit stream (BS2);

with the first and second bit stream (BS1, BS2) being provided for receiving for a decoder, which implements the following steps

f) Decoding the encoded XML scheme transmitted in the first bit stream (BS1) into the normalised XML schema (XMLSn) by means of the metaschema, with the normalised schema and the metaschema (SS) corresponding to the schema used with the coding;

g) Decoding the encoded XML document transmitted in the second bit stream (BS2) by means of the normalised XML schema (XMLSn), without carrying out a further normalisation of the normalised XML schema (XMLSn).

2. Method according to claim 1,

in which element declarations and/or attribute declarations of the schema definition of a structured document are restructured in such a way that anonymous type definitions (ATO) are taken out of the element declarations and/or attribute declarations and are given a name and/or code which is used for referencing purposes in the case of the corresponding element.

3. Method according to claim 1 or 2,

in which, in place of type names and/or element names and/or names of substitution groups, only numbers and also one or more tables containing an allocation between numbers and type names and/or element names and/or names of substitution groups are encoded.

4. Method according to one of claims 1 to 3,

in which one or a number of lists comprising the type names and/or element names and/or or names of substitution groups and the positions of the type names and/or element names and/or names of substitution groups in the list are encoded in place of type names and/or element names and/or names of substitution groups.

5. Method according to one of the preceding claims, in which information for an inheritance tree of types, global elements and/or substitution groups is encoded, with each type being described by an item of information about its type code with reference to the master type and the length of all type codes which refer to the type described

and/or each global element is described by the length of the SBC and an SBC and/or each element in a substitution group by the length of the substitution codes and a substitution code.

6. Method for decoding a first and second bit stream (BS1, BS2), which is generated using an encoding method from an XML document (XML), with the encoding method comprising the following steps:

a) normalising the XML schema (XMLSn) assigned to the XML document (XML), with the normalisation of the XML schema (XMLSn) comprising one of the following steps:

- Simplification of a group which contains only one element:

the group is dissolved and the contained element is put into the content model at the level of the dissolved group, where the attributes minOccurs and maxOccurs of the element are replaced by the product of the corresponding attributes of the dissolved group and the element prior to the regrouping;

- Simplification of a choice group containing an element with the attribute value minOccurs=0:

the attribute minOccurs of the choice group is set to 0 irrespective of the previous value, while the element which had an attribute value minOccurs=0 is assigned an attribute value minOccurs=1;

- Simplification of nested choice groups:

if a choice group contains another choice group which contains the attribute values minOccurs=max-

Occurs=1, that choice group is dissolved and the contents are incorporated directly into the superordinate choice group;

with the terms group, element, content model, attribute, minOccurs, maxOcurrs and choice group being defined in the normative description of the XML schema language;
b) Encoding of the normalised XML schema (XMLSn) with the aid of a metaschema (SS);
c) Transmitting the encoded XML schema in a first bit stream (BS1) ;
d) Encoding the XML document (XML) by means of the associated normalised XML schema (XMLSn);
3) Transmitting the encoded XML document in a second bit stream (BS2);
with the following steps in the decoding method being implemented:
f) Decoding the encoded XML scheme transmitted in the first bit stream (BS1) into the normalised XML schema (XMLSn) by means of the metaschema (SS), with the normalised schema and the metaschema (SS) corresponding to the schema used with the coding;
g) Decoding the encoded XML document transmitted in the second bit stream (BS2) by means of the normalised XML schema (XMLSn), without carrying out a further normalisation of the normalised XML schema (XMLSn).

7. Method according to claim 6,
in which element declarations and/or attribute declarations of a structured document are restructured in such a way that anonymous types (ATO), to which a name and/or code has been assigned for the purposes of transmission, are inserted in the respective element declaration or attribute declaration by which the respective anonymous type is referenced.

8. Method according to claims 6 or 7,
in which type names and/or element names and/or names of substitution groups are decoded from the bit stream via numbers and also one or more tables containing an allocation between numbers and type names and/or element names and/or names of substitution groups.

9. Method according to one of claims 6 to 8
in which type names and/or element names and/or names of substitution groups are decoded from the bit stream via one or more lists containing the type names and/or element names and/or names of substitution groups as well as the positions of the type names and/or element names and/or names of substitution groups in the list.

10. Method according to one of the claims 6 to 9,
in which information for an inheritance tree of types and/or global elements and/or substitution groups is first decoded from the bit stream, with each type being described by an item of information about its type code with reference to the master type and the length of all type codes which refer to the type described
and/or each global element is described by the length of the SBC and an SBC and/or each element in a substitution group by the length of the substitution codes and a substitution code.

11. Device (encoder) for encoding XML documents,
in which an encoder unit is present,
which is designed to implement an encoding method according to one of claims 1 to 5.

12. Device (decoder) for decoding XML documents, in which a decoder unit is present,
which is designed to implement a decoding method according to one of claims 6 to 10.

13. Device according to claim 11,
in which the encoder unit comprises a configurable byte code interpreter which interprets information in a byte code and which, depending on the configuration, produces a code from the structured document based on a byte code, which represents a path or a payload.

14. Device according to claim 12,
in which the decoder unit comprises a configurable byte code interpreter which is configurable by means of information from the bit stream and which, depending on the configuration, produces a path, payload or byte code from the bit stream based on a byte code.

**Revendications**

1. Procédé d'encodage et de transmission d'un document XML (XML) comprenant les étapes suivantes:

   a) normalisation du schéma XML (XMLS) associé au document XML (XML), la normalisation du schéma XML (XMLS) comprenant l'une des étapes suivantes:

   - simplification d'un groupe qui ne contient qu'un élément:

   le groupe est dissous et l'élément contenu est classé au niveau du groupe dissous dans le modèle de contenu (content model), les attributs minOccurs et maxOccurs de l'élément étant remplacés par le produit des attributs correspondants du groupe dissous et de l'élément avant le regroupement;

   - simplification d'un groupe «choice» qui contient un élément avec la valeur d'attribut minOccurs=0:

   l'attribut minOccurs du groupe «choice» est mis à 0 indépendamment de la valeur précédente, à l'élément qui avait une valeur d'attribut minOccurs=0 est affectée une valeur d'attribut minoccurs=1;

   - simplification de groupes «choice» imbriqués: si un groupe «choice» contient un autre groupe «choice» qui contient les valeurs d'attribut minOccurs=maxOccurs=1, ce groupe «choice» est dissous et le contenu est intégré directement dans le groupe «choice» supérieur, les termes «groupe», «élément», «modèle de contenu» (content model), «attribut», «minOccurs», «maxOccurs» et «groupe "choice"» étant définies dans la description normative du langage du schéma XML;

   b) codage du schéma XML normalisé (XMLSn) à l'aide d'un métaschéma (SS);
   c) transmission du schéma XML codé dans un premier train de bits (BS1);
   d) codage du document XML (XML) au moyen du schéma XML normalisé associé (XMLSn);
   e) transmission du document XML codé dans un deuxième train de bits (BS2),
   les premier et deuxième trains de bits (BS1, BS2) étant prévus pour la réception pour un décodeur qui exécute les étapes suivantes:
   f) décodage, dans le schéma XML normalisé (XMLSn), au moyen du métaschéma, du schéma XML codé transmis dans le premier train de bits (BS1), le schéma normalisé et le métaschéma (SS) correspondant aux schémas utilisés lors du codage;
   g) décodage du document XML codé transmis dans le deuxième train de bits (BS2), au moyen du schéma XML normalisé (XMLSn), sans opérer d'autre normalisation du schéma XML normalisé (XMLSn) .

2. Procédé selon la revendication 1,
   dans lequel des déclarations d'éléments et/ou des déclarations d'attributs de la définition de schéma d'un document structuré sont restructurées de manière telle que des définitions de type anonymes (ATO) sont extraites des déclarations d'éléments et/ou des déclarations d'attributs et reçoivent un nom et/ou un code qui est utilisé pour la référenciation dans le cas de l'élément correspondant.

3. Procédé selon la revendication 1 ou 2,
   dans lequel sont codés, au lieu de noms de types et/ou de noms d'éléments et/ou de noms de groupes de substitution, uniquement des numéros ainsi qu'une ou plusieurs tables avec une affectation entre numéros et noms de types et/ou noms d'éléments et/ou noms de groupes de substitution.

4. Procédé selon l'une des revendications 1 à 3,
   dans lequel sont codées une ou plusieurs listes comprenant les noms de types et/ou les noms d'éléments et/ou les noms de groupes de substitution ainsi que les positions des noms de types et/ou des noms d'éléments et/ou des noms de groupes de substitution dans la liste au lieu de noms de types et/ou de noms d'éléments et/ou de noms de groupes de substitution.

5. Procédé selon l'une des revendications précédentes,
   dans lequel sont codées des informations pour l'arbre d'héritage de types, d'éléments globaux et/ou de groupes de substitution, chaque type étant décrit par une information sur son code de type relativement au type primitif et la longueur de tous les codes de types qui se réfèrent au type décrit et/ou chaque élément global étant décrit par la longueur du SBC et un SBC et/ou chaque élément dans un groupe de substitution, par la longueur des codes de substitution et un code de substitution.

6. Procédé de décodage d'un premier et d'un deuxième train de bits (BS1, BS2) qui ont été générés avec un procédé d'encodage à partir d'un document XML (XML), le procédé d'encodage comprenant les étapes suivantes:

a) normalisation du schéma XML (XMLSn) associé au document XML (XML), la normalisation du schéma XML (XMLSn) comprenant l'une des étapes suivantes:

- simplification d'un groupe qui ne contient qu'un élément:

le groupe est dissous et l'élément contenu est classé au niveau du groupe dissous dans le modèle de contenu, les attributs minOccurs et maxOccurs de l'élément étant remplacés par le produit des attributs correspondants du groupe dissous et de l'élément avant le regroupement;

- simplification d'un groupe «choice» qui contient un élément avec la valeur d'attribut minOccurs=0:

l'attribut minOccurs du groupe «choice» est mis à 0 indépendamment de la valeur précédente, à l'élément qui avait une valeur d'attribut minOccurs=0 est affectée une valeur d'attribut minoccurs=1;

- simplification de groupes «choice» imbriqués: si un groupe «choice» contient un autre groupe «choice» qui contient les valeurs d'attribut minOccurs=maxOccurs=1, ce groupe «choice» est dissous et le contenu est intégré directement dans le groupe «choice» supérieur, les termes «groupe», «élément», «modèle de contenu» (content model), «attribut», «minOccurs», «maxOccurs» et «groupe "choice"» étant définies dans la description normative du langage du schéma XML;

b) codage du schéma XML normalisé (XMLSn) à l'aide d'un métaschéma (SS);
c) transmission du schéma XML codé dans un premier train de bits (BS1);
d) codage du document XML (XML) au moyen du schéma XML normalisé associé (XMLSn);
e) transmission du document XML codé dans un deuxième train de bits (BS2),
les étapes suivantes étant exécutées dans le procédé de décodage:
f) décodage, dans le schéma XML normalisé (XMLSn), au moyen du métaschéma (SS), du schéma XML codé transmis dans le premier train de bits (BS1), le schéma normalisé (XMLSn) et le métaschéma (SS) correspondant aux schémas utilisés lors du codage;
g) décodage du document XML codé transmis dans le deuxième train de bits (BS2), au moyen du schéma XML normalisé (XMLSn), sans opérer d'autre normalisation du schéma XML normalisé (XMLSn).

7. Procédé selon la revendication 6,
dans lequel des déclarations d'éléments et/ou des déclarations d'attributs d'un document structuré sont restructurées de manière telle que des types anonymes (ATO) auxquels un nom et/ou un code ont été affectés aux fins de la transmission sont insérés dans la déclaration d'élément ou la déclaration d'attribut respectives par laquelle le type anonyme respectif est référencé.

8. Procédé selon la revendication 6 ou 7,
dans lequel sont décodés, à partir du train de bits, des noms de types et/ou des noms d'éléments et/ou des noms de groupes de substitution par l'intermédiaire de numéros ainsi qu'une ou plusieurs tables avec une affectation entre numéros et noms de types et/ou noms d'éléments et/ou noms de groupes de substitution.

9. Procédé selon l'une des revendications 6 à 8,
dans lequel sont décodés, à partir du train de bits, des noms de types et/ou des noms d'éléments et/ou des noms de groupes de substitution par l'intermédiaire d'une ou de plusieurs listes comprenant les noms de types et/ou les noms d'éléments et/ou les noms de groupes de substitution ainsi que les positions des noms de types et/ou des noms d'éléments et/ou des noms de groupes de substitution dans la liste.

10. Procédé selon l'une des revendications 6 à 9,
dans lequel sont tout d'abord décodées, à partir du train de bits, des informations pour un arbre d'héritage de types et/ou d'éléments globaux et/ou de groupes de substitution, chaque type étant décrit par une information sur son code de type relativement au type primitif et la longueur de tous les codes de types qui se réfèrent au type décrit et/ou chaque élément global étant décrit par la longueur du SBC et un SBC et/ou chaque élément dans un groupe de substitution, par la longueur des codes de substitution et un code de substitution.

11. Dispositif (encodeur) pour encoder des documents XML,
dans lequel une unité d'encodage est présente, laquelle est agencée de manière telle qu'elle exécute un procédé d'encodage selon l'une des revendications 1 à 5.

12. Dispositif (décodeur) pour décoder des documents XML,
dans lequel une unité de décodage est présente, laquelle est agencée de manière telle qu'elle exécute un procédé de décodage selon l'une des revendications 6 à 10.

13. Dispositif selon la revendication 11,
dans lequel l'unité d'encodage comporte un interpréteur de code d'octet configurable qui interprète des informations dans un code d'octet et qui, en fonction de la configuration, à partir du document structuré, sur la base d'un code d'octet, génère un code qui représente un chemin ou une charge utile.

14. Dispositif selon la revendication 12,
dans lequel l'unité de décodage comporte un interpréteur de code d'octet configurable qui est configurable par des informations tirées du train de bits et qui génère un chemin, une charge utile ou un code d'octet en fonction de la configuration à partir du train de bits sur la base d'un code d'octet.

# FIG 1

# FIG 3

anyType

A, TC: 134 ···

AA, 0
TC: 135

AB, 1
TC: 136

AC, 4
TC: 139

ABA, 2
TC: 137

ABB, 3
TC: 138

# FIG 4

Konfiguration für
• Pfad
• Payload
• Schema

BCI

BiM Bitstrom
• Pfad
• Payload
• Schema

BS

Decodierter Pfad/
Payload

Bytecode
Interpreter

oder

Lesen der Schema Information

Zustände des
Bytecodes

P

Bytecode

Pointer auf
Folgezustände

Decodierter
Schema
Bytecode